**Europäisches Patentamt**

**European Patent Office**

**Office européen des brevets**

(19)

(11) Veröffentlichungsnummer: **0 005 535 B1**

(12) **EUROPÄISCHE PATENTSCHRIFT**

(45) Veröffentlichungstag der Patentschrift:
15.07.81

(51) Int. Cl.³: **F 28 F 25/08**, B 01 D 53/20, B 01 J 35/04

(21) Anmeldenummer: **79101484.8**

(22) Anmeldetag: **15.05.79**

(54) Verfahren und Vorrichtung für den Stoff- und/oder direkten Wärmeaustausch und zur Mischung von gasförmigen bzw. dampfförmigen und/oder flüssigen bzw. festen Stoffen.

(30) Priorität: **19.05.78 BE 867241**

(43) Veröffentlichungstag der Anmeldung:
**28.11.79 Patentblatt 79/24**

(45) Bekanntmachung des Hinweises auf die Patenterteilung:
**15.07.81 Patentblatt 81/28**

(84) Benannte Vertragsstaaten:
**AT CH FR GB IT NL**

(56) Entgegenhaltungen:
**DE-B-1 059 888**
**DE-B-1 268 596**
**GB-A-1 294 926**
**US-A-2 960 322**
**US-A-3 804 389**

(73) Patentinhaber: **Manteufel, Rolf Paul Christian,
Epiceadreef 11, B-2180 Kalmthout-Heide (BE)**

(72) Erfinder: **Manteufel, Rolf Paul Christian, Epiceadreef 11,
B-2180 Kalmthout-Heide (BE)**

(74) Vertreter: **Görtz, Helmut, Dipl.-Ing.,
Schneckenhofstrasse 27, D-6000 Frankfurt am Main (DE)**

## Verfahren und Vorrichtung für den Stoff- und/oder direkten Wärmeaustausch und zur Mischung von gasförmigen bzw. dampfförmigen und/oder flüssigen bzw. festen Stoffen

Für den Stoff- und/oder direkten Wärmeaustausch werden verschiedenartige Kolonneneinbauten eingesetzt, die nach unterschiedlichen Prinzipien arbeiten oder die aufgrund von Fertigungsüberlegungen gestaltet sind. Entsprechend ihrer Arbeitsweise wurden die Kolonneneinbauten zur besseren Übersichtlichkeit in Gruppen eingeteilt. So wird zwischen den althergebrachten Boden- und Füllkörperkolonnen sowie Sprüh- oder Rieselkolonnen neben mechanisch bewegten Rotations- und Pulsationskolonnen unterschieden. In neuerer Zeit sind die Kolonnenpakkungen hinzugekommen. Zwangsläufig weisen alle Kolonneneinbauten neben ihren speziellen Vorteilen mehr oder weniger Nachteile auf, so dass ihr Einsatz je nach Anwendungsfall erfolgen muss. Ziel muss es deshalb sein, einen allgemein einsetzbaren Kolonneneinbau zu finden, der sowohl die wissenschaftlichen Erkenntnisse des Stoff-, Wärme- und Impulsaustausches berücksichtigt, als auch eine wirtschaftliche Fertigung bei allen industriell benötigten Kolonnengrössen und Werkstoffen ermöglicht.

Um diesen Kolonneneinbau für alle Kolonnengrössen einsetzen zu können, muss dieser aus Einzelelementen gleicher Abmessungen bestehen, die je nach Kolonnendurchmesser und -höhe zusammengesetzt werden können. Es muss ausserdem eine selbsttragende Konstruktion sein, die den Einsatz aller benötigten Werkstoffe gestattet und unabhängig von der Materialfestigkeit ist. Durch die genannten Konstruktionsmerkmale wird eine wirtschaftliche Serienfertigung und Lagerhaltung ermöglicht.

Andererseits muss die Aufteilung des gesamten Kolonnenraumes so sein, dass gleichgrosse Räume gebildet werden, deren Gestaltung den Forderungen eines maximalen Stoff-, Wärme- und Impulsaustausches gerecht wird.

Um ein minimales spezifisches Kolonnenvolumen zu erreichen, müssen beim Stoff- und/oder Wärmeaustausch die Gase bzw. Dämpfe und/oder Flüssigkeiten bzw. festen Stoffteilchen bei unterschiedlichen Konzentrationen und/oder Temperaturen mit möglichst hoher Geschwindigkeit im Gegenstrom durch die Kolonne geführt und somit einander in Berührung gebracht werden, dass ein maximaler Stoff-, Wärme- und Impulsaustausch erfolgt.

In der Praxis ist bei den meisten Kolonneneinbauten der Gegenstrom im Bereich jedes einzelnen Kolonnenquerschnittes nicht gewährleistet, und mit wachsendem Kolonnendurchmesser wird er mehr und mehr gestört. Auch treten bei steigender Geschwindigkeit der im Gegenstrom geführten Stoffströme leicht Rückvermischungen über die gesamte Kolonnenhöhe auf, wodurch die Durchsatzleistung begrenzt wird.

Bei Bodenkolonnen ist durch die Querführung der Flüssigkeit über die Böden nur ein Kreuzstrom möglich, so dass bei grösseren Kolonnendurchmessern Bodenunterteilungen mit zusätzlichen Ablaufmöglichkeiten notwendig sind. Jede Kolonnengrösse macht dadurch spezielle Konstruktionen erforderlich. Auch eignen sich nicht alle Werkstoffe für Bodenkolonnen, so können z.B. die meistens korrosionsbeständigen und preisgünstigen keramischen Materialien und die verschiedenen Kunststoffe nicht eingesetzt werden.

Bei Füllkörperkolonnen kommen zwar die Vorteile der wirtschaftlichen Serienfertigung und die Verwendungsmöglichkeit aller Werkstoffe bei gleichzeitiger Einsatzmöglichkeit in allen Kolonnendurchmessern zum Tragen, jedoch sind die Flüssigkeitsverteilungen innerhalb der Kolonne durch die regellose Füllkörperschüttung mit ihren unterschiedlichen Hohlräumen so stark gestört, dass nicht nur die örtlichen Mengenverhältnisse der Stoffströme unterschiedlich sind, sondern auch der Gegenstrom über den gesamten Kolonnenquerschnitt nicht eingehalten werden kann (Maldistribution). Sehr grosse Austauschkolonnen können deshalb mit regellosen Füllkörper-Schüttungen nicht zufriedenstellend betrieben werden.

Verständlich ist auch, dass bei Sprühkolonnen ohne die den Strömungsraum begrenzenden Einbauten durch die zwangsweise auftretende Rückvermischung durch Turbulenz eine Aufrechterhaltung des Gegenstromes zwischen den Phasen nicht möglich ist. Kolonnen mit dynamischen Einbauten scheiden bei diesen Betrachtungen aus wirtschaftlichen Überlegungen aus.

Letzten Endes kann nur bei Rieselkolonnen (Film-) und bei geordneten Kolonnenpackungen durch die regelmässige Aufteilung der Kolonnenräume ein exakter Gegenstrom innerhalb der Kolonne erzielt werden. Aus diesem Grunde wird bei Hochleistungskolonnen mehr und mehr diese neue Art von Kolonneneinbauten angewandt, soweit nicht ein zu hoher Materialaufwand oder zu hohe Fertigungskosten den wirtschaftlichen Einsatz dieser Kolonneneinbauten erschweren.

Ein besonderes Problem ist jedoch auch bei diesen regelmässigen Kolonneneinbauten die gleichmässige Flüssigkeitsverteilung auf die verhältnismässig grosse Anzahl von vertikalen Kolonnenräumen. Durch eine mehr oder weniger nicht vermeidbare ungleichmässige Flüssigkeitsaufgabe auf die Einzelräume werden die Mengenverhältnisse der im Austausch befindlichen Stoffströme gestört, was eine Verminderung der Trennwirkung der Gesamtkolonne zur Folge hat.

Diese Schwierigkeiten und Nachteile sind durch die Ausgestaltung der in der DE-B-1 268 596 beschriebenen Kolonne mit regelmässigen in Schichten angeordneten Einbauten dadurch weitgehend ausgeschaltet, dass prismatische in der Mitte eingeschnürte und in Strömungsrichtung offene Hohlkörper so gegeneinander versetzt angeordnet sind, dass unter Ausbildung von zwei getrennten Systemen eine Vielzahl von Einzelströmungen durch die Hohlkörper sich in einem gemeinsamen Mantelraum wieder über den ganzen Kolonnenquerschnitt miteinander vermischen kann.

Auch könnte durch Erhöhung der Durchsatzleistung und damit Verkleinerung der spezifischen Kolonnenfläche die Flüssigkeitsmenge/Kolonnenfläche bei gegebener Trennaufgabe erhöht werden, wodurch die Flüssigkeitsaufgabe auf die Einzelkanäle gleichmässiger würde.

Bei den Rieselkolonnen und den Kolonnenpackungen nach der genannten DE-B-1 268 596 ist die Durchsatzleistung jedoch dadurch begrenzt, dass in jedem Kolonnenquerschnitt die Flüssigkeit durch die gleichen Öffnungen ablaufen muss, durch die auch die Gase bzw. Dämpfe entgegenströmen. Bei verhältnismässig hohen Geschwindigkeiten ist dadurch ein Gegenstrom in der Kolonne nicht mehr möglich, denn es kommt zum Stauen und Rücktransport der Flüssigkeit innerhalb der Kolonnenpackung. Auch ist die Vermischung der Einzelströme im Mantelraum eines Kolonnenquerschnittes mehr oder weniger nur auf die Gas- bzw. Dampfströme beschränkt, da die an den vertikalen oder schrägen Kanalwänden der Packungen ablaufenden Flüssigkeitsfilme in den einzelnen vertikalen Kanälen verbleiben und nicht neu verteilt werden. Der notwendige Konzentrationsausgleich kann dadurch bei einer nicht vollständig zu erreichenden gleichmässigen Flüssigkeitsaufgabe nur in der Gas- bzw. Dampfphase ablaufen.

Es wurde nun gefunden, dass dagegen der Gegenstrom in einer Kolonne auch bei sehr hohen Gas- bzw. Dampfgeschwindigkeiten zur Erreichung eines maximalen Stoff-, Wärme- und Impulsaustausches und dadurch in den einzelnen vertikalen Kanälen angestauter Flüssigkeit aufrechterhalten werden kann, wenn die im Gegenstrom geführten Gase bzw. Dämpfe oder Flüssigkeiten statt durch die an den Verengungen der vertikalen Kanäle angestauten Flüssigkeitsschichten durch die in den Kanalwänden vorhandenen seitlichen Öffnungen in die benachbarten Mischkammern abströmen. Es kommt hierdurch zu abwechselnden Strömungen von den Mischkammern des einen vertikalen Kanales in die ihn seitlich umgebenden Mischkammern und umgekehrt, wodurch eine zwangsweise wiederholte seitliche Vermischung von Mischkammer zu Mischkammer und damit ein Konzentrationsausgleich aller vertikalen Einzelströme über den ganzen Kolonnenquerschnitt stattfindet. Die Neuverteilung der ungleichmässig auf die Einzelkanäle aufgegebenen Flüssigkeitsmengen wird dadurch begünstigt, dass der an den Kanalwänden ablaufende Flüssigkeitsfilm an deren seitlichen Öffnungen abtropfen muss und dadurch in den abwechselnd von Mischkammer zu Mischkammer strömenden Gas- bzw. Dampf- oder Flüssigkeitsstrom gelangt, wobei die Wände der Mischkammern als Prallflächen für die Tropfenabscheidung und als Stoffaustauschfläche dienen.

Das erfindungsgemässe Verfahren für den Stoff- und/oder direkten Wärmeaustausch und zur Mischung von gas- bzw. dampfförmigen und flüssigen bzw. festen Stoffen ohne oder mit Katalysatoren in einer Kolonne mit von prismatischen, in der Mitte eingeschnürten und in Strömungsrichtung offenen Hohlkörpern begrenzten Mischräumen, ist dadurch gekennzeichnet, dass die dampf- bzw. gasförmigen und flüssigen Stoffe nach ihrer jeweiligen Vermischung getrennt von der Flüssigkeits- oder Feststoffzufuhr aus den Mischräumen abströmen und der Druckverlust des im Gegenstrom durch die Kolonne geführten Gases bzw. Dampfes oder der Flüssigkeit unabhängig vom Flüssigkeits- bzw. Feststoffstau an den entsprechenden Zu- und Ablaufstellen ist.

Die Vorrichtung zur Durchführung des erfindungsgemässen Verfahrens ist dadurch gekennzeichnet, dass jede Mischkammer neben den Zu- und Ablauföffnungen weitere Öffnungen sowohl für den Eintritt als auch für den Austritt des im Gegenstrom durch die Kolonne geführten Gases bzw. Dampfes oder der Flüssigkeit hat.

Ein Ausführungsbeispiel der Erfindung ist in der Zeichnung dargestellt und wird im folgenden näher beschrieben.

Fig. 1 ist eine vereinfachte Darstellung der erfindungsgemässen Vorrichtung für den Stoff- und/oder direkten Wärmeaustausch und zur Mischung von gasförmigen und/oder flüssigen bzw. festen Stoffen,

Fig. 2 ist eine Darstellung der Einzelheit A der erfindungsgemässen Vorrichtung mit Flüssigkeitsablaufrohr und Flüssigkeitsverschlussdeckel,

Fig. 3 ist ein Horizontalschnitt zu Fig. 1, in dem die Öffnungen und die darunterliegenden Öffnungen der Fig. 1 des vertikalen Strömungskanals durch aufeinanderstehende Dreieckshohlkörper derart gebildet sind, dass die Stirnseiten der Dreieckshohlkörper konkav oder konvex gestaltet sind.

Die vertikale Mischkammer 11 ist oben und unten an den Stellen 12 und 13 eingeschnürt, so dass die von oben nach unten laufende Flüssigkeit oder der Feststoff an den Stellen 12 und 13 durch den Druckverlust der im Gegenstrom geführten Gase oder der Flüssigkeit angestaut wird. Eine Ausführungsart der Stellen 12 und 13 ist aus der Einzelheit A erkennbar.

Der in der vertikalen Mischkammer 11 an den von den Flüssigkeits- oder Feststoffzu- und -ablaufstellen 12, 13 getrennt angeordneten Öffnungen 14 eintretende Gas- bzw. Dampf- oder Flüssigkeitsstrom kann die vertikale Mischkammer 11, nachdem er sich mit der Flüssigkeit oder dem Feststoff gemischt und danach wieder von derselben getrennt hat, durch die Öffnungen 15 verlassen. Die Trennung von Flüssigkeit bzw. Feststoff und Dampf wird dabei durch Prallwirkung an den Trennwänden der Mischkammern ermöglicht. Auch wird hierdurch vermieden, dass der Gas- bzw. Dampf- oder Flüssigkeitsstrom durch die an den Ablaufstellen 12, 13 angestaute Flüssigkeit strömen muss und einen entsprechenden Druckverlust erfahren würde. Die Öffnungen 14 der vertikalen Mischkammer 11 sind wie die Öffnungen 15 grösser als die Flüssigkeitsablauföffnungen 12 oder 13. Der Druckverlust des von unten nach oben strömenden Gases bzw. Dampfes oder der Flüssigkeit ist dadurch kleiner als die Flüssigkeitsstauhöhe an den Zu- und Ablaufstellen 12, 13 der durch die Kolonne ablaufenden Flüssigkeit. Durch diesen erfindungsgemässen Gedanken der vom Dampf getrennten Flüssigkeits- oder Feststoffzuführung in die Mischkammer 11 wird die Druchsatzleistung der Kolonne nicht durch das Anstauen von durchströmter Flüssigkeit oder angestautem Feststoff begrenzt, wie z.B. bei Füllkörperschüttungen oder Dualflow-Systemen.

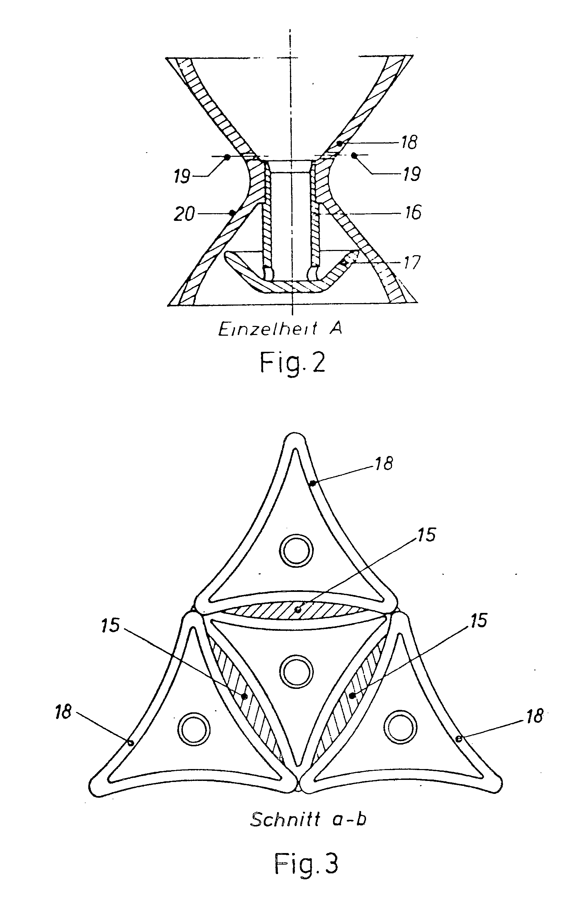

Die vom Gas bzw. Dampf getrennte Flüssigkeitszufuhr ist durch ein in der Einzelheit A (Fig. 2) gekennzeichnetes Flüssigkeitsablaufrohr 16 mit Flüssigkeitsverschlussdeckel 17 gewährleistet. Zusätzlich fliesst durch seitliche Öffnungen 19 die durch den Druckverlust der Gegenströmung angestaute Flüssigkeitsmenge auf die Wand 20 eines die Öffnungen 14, 15 für das strömende Medium bildenden Dreieckshohlkörpers 18. Es kommt speziell bei hohen Durchsatzleistungen zur wiederholten Neuverteilung der ablaufenden und der durch den Gegenstrom versprühten Flüssigkeit in den parallel angeordneten Mischkammern 11, wodurch sich die ungleichmässig auf die vertikalen Einzelkanäle aufgegebenen Flüssigkeitsmengen über den Kolonnenquerschnitt ausgleichen.

Der hydrostatische Flüssigkeitsverschluss kann auch durch entsprechende Gestaltung der Zu- und Ablauföffnungen 12, 13 erreicht werden, indem der freie Querschnitt kleiner ist als die seitlichen Gas- bzw. Dampf-Öffnungen 14, 15.

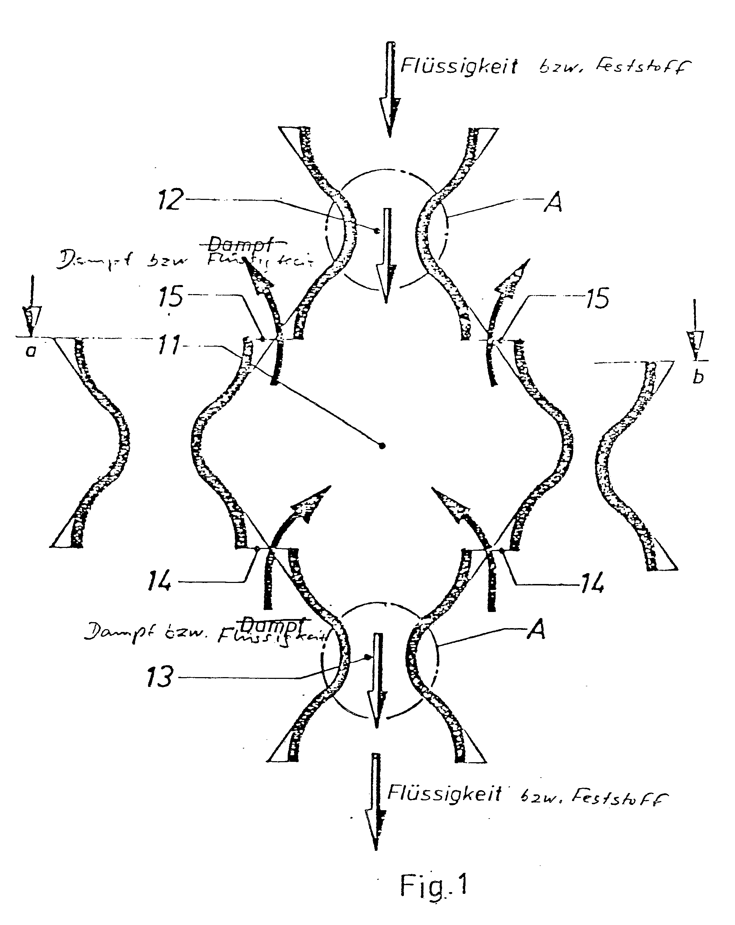

Wie aus dem Schnitt a–b der Fig. 3 ersichtlich ist, sind die Öffnungen 15 und entsprechend auch die darunter liegenden Öffnungen 14 der Fig. 1 der vertikalen Mischkammer 11 durch aufeinander stehende Dreieckshohlkörper 18 derart gebildet, dass die Stirnseiten der Dreieckshohlkörper 18 konkav oder konvex gestaltet sind. Beim Aufeinanderstellen der Dreieckshohlkörper 18 entstehen so Öffnungen 15, 14 für die von unten nach oben gerichteten vertikalen Gas- bzw. Dampf- und Flüssigkeitsströmungen.

Durch die bekannte Dreiecksanordnung der in Schichten nebeneinander und auf Lücke übereinander stehenden konkav oder konvex eingebeulten Dreieckshohlkörper 18 werden mehrfach nebeneinander angeordnete vertikale Mischkammern 11 gebildet, die miteinander durch die Öffnungen 14, 15 der konkav oder konvex gekrümmten Dreiecksstirnseiten in Verbindung stehen.

Der Vollständigkeit halber sei erwähnt, dass in Sonderfällen die Hohlkörper 18 aus katalytischem Material bestehen oder einen katalytischen Überzug haben können.

## Patentansprüche

1. Verfahren für den Stoff- und/oder direkten Wärmeaustausch und zur Mischung von gas- bzw. dampfförmigen und/oder flüssigen bzw. festen Stoffen ohne oder mit Katalysator in einer Kolonne mit von prismatischen, in der Mitte eingeschnürten und in Strömungsrichtung offenen Hohlkörpern (18) begrenzten Mischkammern (11), dadurch gekennzeichnet, dass die dampf- bzw. gasförmigen und/oder flüssigen bzw. festen Stoffe nach ihrer jeweiligen Vermischung getrennt von der Flüssigkeits- oder Feststoffzufuhr aus den Mischkammern (11) abströmen und der Druckverlust des im Gegenstrom durch die Kolonne geführten Gases bzw. Dampfes oder der Flüssigkeit- bzw. Feststoffstau an den entsprechenden Zu- und Ablauföffnungen (12, 13) ist.

2. Vorrichtung zur Durchführung des Verfahrens nach Anspruch 1, dadurch gekennzeichnet, dass jede Mischkammer (11) neben den Zu- und Ablauföffnungen (12, 13) weitere Öffnungen (14, 15) sowohl für den Eintritt als auch für den Austritt des im Gegenstrom durch die Kolonne geführten Gases bzw. Dampfes oder der Flüssigkeit hat.

3. Vorrichtung nach Anspruch 2, dadurch gekennzeichnet, dass die Zu- und Ablauföffnungen (12, 13) einen hydrostatischen Flüssigkeitsverschluss (16, 17) haben.

4. Vorrichtung nach Anspruch 2, dadurch gekennzeichnet, dass die Öffnungen (14, 15) für den Eintritt als auch den Austritt des Gases bzw. Dampfes oder der Flüssigkeit einen grösseren freien Querschnitt als die Zu- und Abläufe (12, 13) haben.

5. Vorrichtung nach Anspruch 1 bis 4, dadurch gekennzeichnet, das jede Mischkammer (11) mehrere Zu- und Ablaufstellen (12, 13, 19) hat.

6. Vorrichtung nach Anspruch 2 bis 5, dadurch gekennzeichnet, dass die Öffnungen (14, 15) für den Eintritt als auch den Austritt des im Gegenstrom durch die Kolonne geführten Gases bzw. Dampfes oder der Flüssigkeit durch aufeinander gestelte konkav oder konvex eingebeulte Dreieckshohlkörper (18) gebildet sind.

7. Vorrichtung nach Anspruch 6, dadurch gekennezichnet, dass die durch die Hohlkörper (18) gebildeten Mischräume (11) sowohl übereinander als auch nebeneinander angeordnet sind.

8. Vorrichtung nach Anspruch 2 bis 7, dadurch gekennzeichnet, dass die Wände (20) der Mischräume aus katalytischem Material bestehen oder einen katalytischen Überzug haben.

## Claims

1. Process for the mass transfer and/or direct heat transfer and for mixing of gaseous or vaporous and/or liquid or solid materials without or with a catalyst in a column having mixing chambers (11) which are delimited by prismatic hollow bodies (18) constricted in the middle and open in the direction of flow, characterised in that the vaporous or gaseous and/or liquid or solid materials, after they have been mixed, in each case flow out of the mixing chambers (11) separately from the liquid or solid feed, and the pressure drop of the gas or vapour or the liquid, passed in counter-current through the column, is independent of the hold-up of liquid or solid at the corresponding inflow and outflow orifices (12, 13).

2. Equipment for carrying out the process according to Claim 1, characterised in that each mixing chamber (11) has, in addition to the inflow and outflow orifices (12, 13), further orifices (14, 15) for both the inlet and the outlet of the gas or vapour or the liquid, passed in counter-current through the column.

3. Equipment according to Claim 2, characterised in that the inflow and outflow orifices (12,13) have a hydrostatic liquid seal (16, 17).

4. Equipment according to Claim 2, characterised in that the orifices (14, 15) for both the inlet and the outlet of the gas or vapour or the liquid have a larger free cross-section than the inflows and outflows (12, 13).

5. Equipment according to Claim 1 to 4, characerised in that each mixing chamber (11) has a plurality of inflow and outflow points (12, 13, 19).

6. Equipment according to Claim 2 to 5, characterised in that the orifices (14, 15) for both the inlet and the outlet of the gas or vapour or the liquid or solid, passed in counter-current through the column, are formed by triangular hollow bodies (18) which are placed upon each other and have concave or convex indentations.

7. Equipment according to Claim 6, characterised in that the mixing chambers (11) formed by the hollow bodies (18) are arranged both above each other and side by side.

8. Equipment according to Claim 2 to 7, characterised in that the walls (20) of the mixing chambers consist of a catalytic material or have a catalytic coating.

## Revendications

1. Procédé pour l'échange de matière et/ou de chaleur à contact direct et pour le mélange de matières en forme de gaz ou de vapeur et/ou liquides ou solides, avec ou sans catalyseur, dans une colonne présentant des chambres de mélange (11) délimitées par des corps creux (18) prismatiques, étranglés au milieu et ouverts dans la direction de l'écoulement, caractérisé en ce que les matières en forme de vapeur ou de gaz et/ou liquides ou solides s'écoulent hors des chambres de mélange (11), après leur mélange respectif, séparément de l'amenée de liquide ou de l'amenée de substance solide, et en ce que la perte de pression du gaz ou respectivement de la vapeur ou du liquide guidé en contre-courant à travers la colonne est indépendante de l'accumulation de liquide ou respectivement de substance solide aux ouvertures d'entrée et de sortie correspondantes (12, 13).

2. Dispositif pour la mise en œuvre du procédé suivant la revendication 1, caractérisé en ce que chaque chambre de mélange (11) comprend, outre les ouvertures d'entrée et de sortie (12,13) d'autres ouvertures (14, 15) aussi bien pour l'entrée que pour la sortie du gaz ou de la vapeur ou du liquide guidé à contre-courant à travers la colonne.

3. Dispositif suivant la revendication 2, caractérisé en ce que les ouvertures d'entrée et de sortie (12, 13) présentent une fermeture aux liquides, hydrostatique (16, 17).

4. Dispositif suivant la revendication 2, caractérisé en ce que les ouvertures (14, 15) pour l'entrée et la sortie du gaz ou respectivement de la vapeur ou du liquide présentent une section transversale libre plus grande que les entrées et sorties (12, 13).

5. Dispositif suivant l'une des revendications 1 à 4, caractérisé en ce que chaque chambre de mélange (11) comprend plusieurs emplacements d'entrée et de sortie (12, 13, 19).

6. Dispositif suivant l'une des revendications 2 à 5, caractérisé en ce que les ouvertures (14, 15) pour l'entrée et la sortie du gaz ou respectivement de la vapeur guidé en contre-courant à travers la colonne ou du liquide ou respectivement de la substance solide formées par des corps creux triangulaires (18) posés l'un sur l'autre et bosselés de manière concave ou convexe.

7. Dispositif suivant la revendication 6, caractérisé en ce que les chambres de mélange (11) formées par les corps creux (18) sont agencées aussi bien l'une au-dessus de l'autre que l'une à côté de l'autre.

8. Dispositif suivant l'une des revendications 2 à 7, caractérisé en ce que les parois (20) des chambres de mélange sont constituées d'une matière catalytique ou présentent un revêtement catalytique.

Flüssigkeit bzw. Feststoff

12 — A

Dampf bzw. Flüssigkeit

15 — 15

a — 11 — b

Dampf bzw. Flüssigkeit

14 — 14

Dampf bzw. Flüssigkeit

13 — A

Flüssigkeit bzw. Feststoff

Fig.1

Einzelheit A

Fig. 2

Schnitt a-b

Fig. 3